# FASCICULE DE BREVET EUROPEEN

(11) **EP 0 615 074 B1**
(45) Date de publication et mention de la délivrance du brevet: **14.05.1997**
(21) Numéro de dépôt: 94420077.3
(22) Date de dépôt: 08.03.1994
(51) Int. Cl.: F16D 69/04, F16D 65/092

(54) **Garnitures de frein à plots à fixation améliorée**
Aus Blöcken bestehender Bremsbelag mit verbesserter Befestigung dieser Blöcke
Brake pad comprising individual brake blocks with improved mounting

(30) Priorité: 12.03.1993 FR 9303104
(43) Date de publication de la demande: 14.09.1994
(73) Titulaire: LE CARBONE LORRAINE, F-92400 Courbevoie (FR)
(72) Inventeur: Themelin, Luc, F-95540 Mery/Oise (FR); Cornillon, Georges, F-93320 Les Pavillons-sous-Bois (FR); Altmeyer, Michel, F-75001 Paris (FR)
(74) Mandataire: Mougeot, Jean-Claude

(56) Documents cités:
- EP-A- 0 102 469
- EP-A- 0 106 782
- EP-A- 0 428 191
- DE-U- 8 514 607

## Description

### DOMAINE DE L'INVENTION

L'invention concerne le domaine des freins et en particulier celui des garnitures de freins (en anglais disc brake pad) constitués par des plots de friction assemblés sur un support généralement plan, garnitures destinées à être changées après usure des plots.

### ART ANTERIEUR

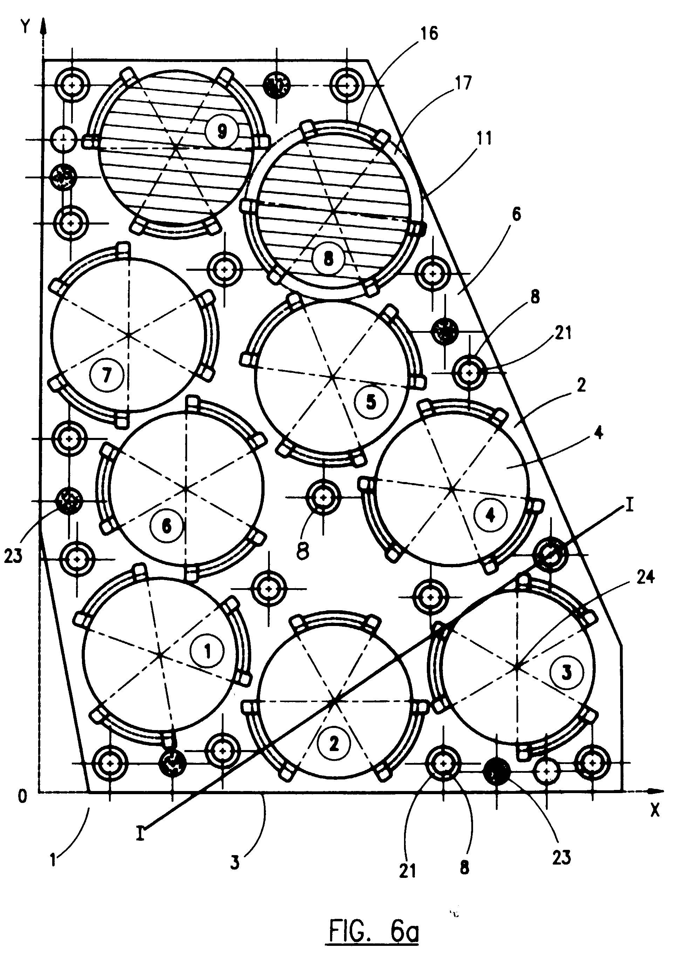

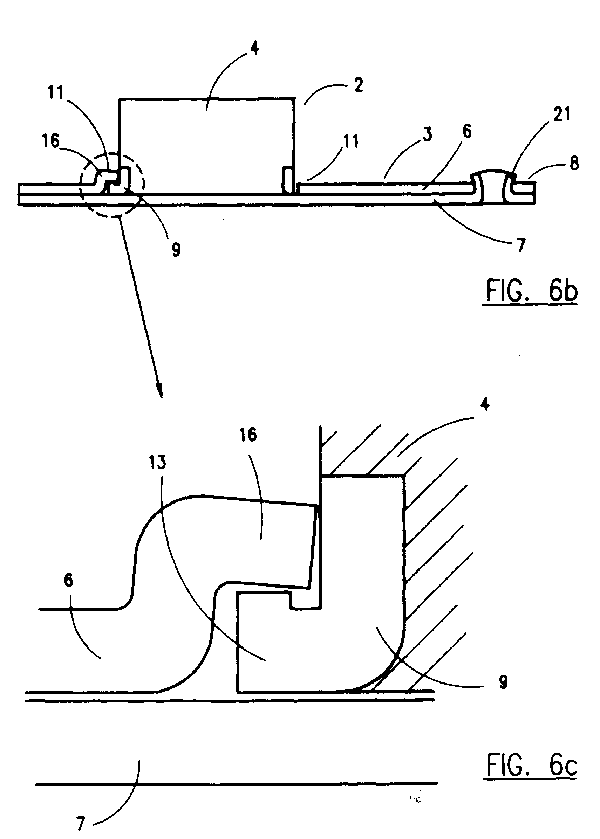

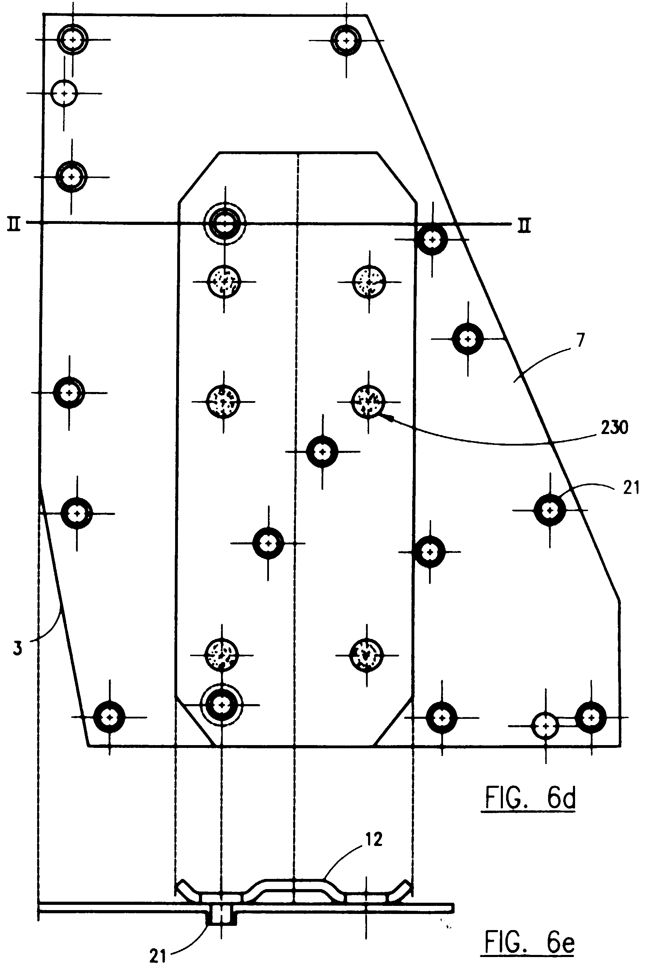

On connaît déjà de nombreuses configurations de garnitures de frein.
Ainsi, d'une part, le brevet européen EP-B1-106 782 décrit plusieurs types d'assemblages de plots de friction sur un support. Dans ce brevet, les plots de friction sont constitués par un bloc de friction en métal fritté et d'un élément d'assemblage : une tige de section inférieure à celle dudit bloc. Comme représenté aux figures 1 à 11 de ce brevet européen EP-B1-106 782, l'assemblage des plots et du support se fait selon 3 modalités :
- selon une première modalité, seule revendiquée, les plots sont assemblés à une plaque souple muni d'orifices régulièrement espacés de section sensiblement voisine de celle de ladite tige, la fixation étant réalisée en introduisant lesdites tiges dans lesdits orifices et en déformant la tête de ladite tige pour réaliser l'équivalent d'un rivet.
   La plaque souple est elle-même rivetée à une plaque rigide munie d'une patte de fixation.
   Dans cette modalité, représentée à la figure 6, les plots peuvent fléchir, sous l'action d'une contrainte mécanique, individuellement grâce à la flexibilité de ladite plaque souple.
- selon une seconde modalité, représentée aux figures 9 et 10, les plots sont assemblés à une plaque rigide muni d'orifices régulièrement espacés de section sensiblement voisine de celle de ladite tige, la fixation étant réalisée en introduisant lesdites tiges dans lesdits orifices et en déformant la tête de ladite tige pour réaliser l'équivalent d'un rivet.
   La plaque rigide est munie d'une patte de fixation.
- selon une troisième modalité, représentée aux figures 9 et 11, les plots sont assemblés à une plaque rigide en soudant ou brasant la tête desdites tiges sur une plaque rigide, elle-même munie d'une patte de fixation.
   D'autre part, par la demande européenne EP-A1-428 191, on connaît aussi une garniture de frein, représentée aux figures 2 et 3, obtenue par assemblage (analogue à un rivetage) de plots de friction constitués par un bloc de friction contenu dans un manchon métallique solidaire d'une tige à tête usinée et de diamètre inférieur à celui dudit bloc, ce manchon à tête constituant un élément d'assemblage sur une plaque rigide muni d'orifices tronconiques.

Enfin, il est connu par le modèle d'utilité allemand n° DE 85 14 607 de maintenir les plots de friction à l'aide de deux plaques planes assemblées à l'aide de rivets, l'une étant rigide et comportant des moyens de fixation, l'autre étant munie d'orifices de forme correspondant à celle desdits plots. Les plots de friction sont constitués d'un bloc de friction contenu dans un manchon solidaire d'un disque de support sur lequel est fixé un ressort circulaire. Lesdits plots se déplacent librement dans lesdits orifices, avec un débattement limité par lesdites plaques, et sont appuyés élastiquement contre les disques de freinage par l'intermédiaire desdits ressorts.

### PROBLEME POSE

Afin de pouvoir satisfaire les demandes actuelles du marché, la demanderesse a cherché à résoudre simultanément plusieurs types de problèmes :
- d'une part, elle a recherché une solution fiable au problème de la perte de plots de friction durant le freinage, problème souvent rencontré avec les produits déjà connus, et a reconnu, pour ce faire, la nécessité d'obtenir une garniture avec plots à rotation bloquée.
- d'autre part, elle a recherché un moyen simple et économique d'obtenir ces garnitures avec plots à rotation bloquée, et indexation rapide pour faciliter leur montage, et cela sans avoir à faire appel soit à un empilement compact de plots hexagonaux ou soit à une fixation par brasage/soudage comme décrit dans l'EP 106 782. En effet, d'une part, il est préférable que les plots de friction soient espacés de manière à améliorer l'image thermographique de la garniture vis à vis du disque lors d'un freinage, à faciliter leur refroidissement et l'évacuation des débris d'usure.

D'autre part, la fixation par brasage/soudage présente des inconvénients (rigidification des pièces assemblées, problème du contrôle de la soudure/brasure).
- enfin, les exigences modernes de qualité nécessitent de plus en plus de contrôles de manière à garantir au client la qualité du produit livré et éviter à ce dernier des tests de réception coûteux.
   Or, le contrôle non-destructif des soudures/brasures, bien que connu en lui-même, n'est pas d'un coût négligeable, ni d'une mise en oeuvre aisée quand de très nombreuses pièces à souder sont présentes sur une même pièce de petite dimension.
   La demanderesse a donc recherché un moyen de fixation de plots de friction sur son support ne faisant pas appel aux techniques connues de soudage/brasage, tout en garantissant une fiabilité élevée du système d'assemblage.

### DESCRIPTION DE L'INVENTION

La garniture de frein selon l'invention est constituée par des plots de friction assemblés sur un support et formant une surface de friction, chacun desdits plots de friction comprenant un bloc de friction, de section constante sur toute sa hauteur, solidaire d'un élément d'assemblage dudit plot sur ledit support, ledit support comprenant au moins une plaque rigide métallique munie d'une patte de fixation, et est caractérisée en ce que,
a) ledit élément d'assemblage est constitué par une embase dudit bloc de friction ayant un rebord dépourvu de symétrie axiale et extérieur à la projection orthogonale dudit bloc sur ledit support,
b) ledit support est constitué de deux plaques métalliques, une plaque rigide dite de support munie de ladite patte de fixation, et une plaque dite d'assemblage comprenant des orifices de section voisine de celle dudit bloc, de manière à pouvoir pincer ledit rebord entre tout ou partie d'une couronne de ladite plaque d'assemblage délimitant chaque dit orifice, et ladite plaque rigide d'assemblage, grâce à des moyens de liaison mécanique entre ces deux plaques, comprenant la coopération d'éléments mâles d'une plaque avec des éléments femelles correspondants de l'autre plaque,
c) au moins une desdites plaques présente une déformation locale (voisine desdits orifices) de profondeur E, coopérant avec tout ou partie dudit rebord d'épaisseur E' (E' > E), de manière à enserrer ledit rebord et obtenir ainsi le blocage en rotation dudit plot de friction.

La solution trouvée par la demanderesse résout, de manière économique, l'ensemble des problèmes posés, qu'il s'agisse de l'arrachement des plots, de leur blocage en rotation, ou de l'exigence de qualité.

En effet, la garniture selon l'invention est obtenue très simplement, comme cela se déduit immédiatement de l'examen de la garniture selon l'invention :
- fabrication de plots de friction constitués par un bloc de friction, en matériau de friction connu en lui-même, solidaire d'une embase de forme propre à l'invention.
- fabrication des plaques d'assemblage et de support par les opérations connues et automatisables de déformation des matériaux métalliques en bandes (emboutissage, repoussage, découpage, etc...), de manière à former lesdits moyens de liaison mécanique (éléments mâles et femelles) et ladite déformation locale permettant d'enserrer ledit rebord.
- assemblage des plots de friction et des plaques formant leur support en faisant coopérer lesdits éléments mâles et femelles, ce qui ne nécessite pas de faire appel à des moyens autres (rivets par exemple), de manière à pinçer sous tension le rebord des plots entre les plaques dite d'assemblage et dite de support.

Il résulte de cette simplicité de fabrication des garnitures de frein selon l'invention un avantage économique dû à leur faible coût relatif.

Une caractéristique importante des garnitures de frein selon l'invention réside dans le fait que les plots de friction sont maintenus solidaires de leur support sans liaison rigide, puisque le rebord de chaque plot de friction est seulement pincé entre deux plaques.

En effet, des essais ont montré qu'il était très important pour obtenir une durée de vie élevée (au moins 2 ans) de la garniture de frein que les plots de friction soient à la fois totalement solidaires de leur support, et bien sûr n'aient pas tendance à s'arracher ou à tourner, et en même temps aient un certain degré de liberté, une certaine flexibilité par rapport au support pour supporter des à-coups lors d'un freinage brusque.

Une autre caractéristique importante de l'invention vient du fait que la garniture selon l'invention permet de pincer plus ou moins fort le rebord du plot de friction, par un choix approprié, à la fois des caractéristiques mécaniques des matériaux, notamment la flexibilité, et de la mise sous tension plus ou moins grande des plaques lors de l'assemblage final en rapprochant plus ou moins les plaques grâce aux dits moyens de liaison mécanique.

Ainsi, c'est un grand avantage de l'invention de pouvoir doser séparément, d'une part la flexibilité des plots par rapport à leur support, et d'autre la flexibilité du support lui-même, de manière à pouvoir adapter la garniture de frein aux conditions d'utilisation.

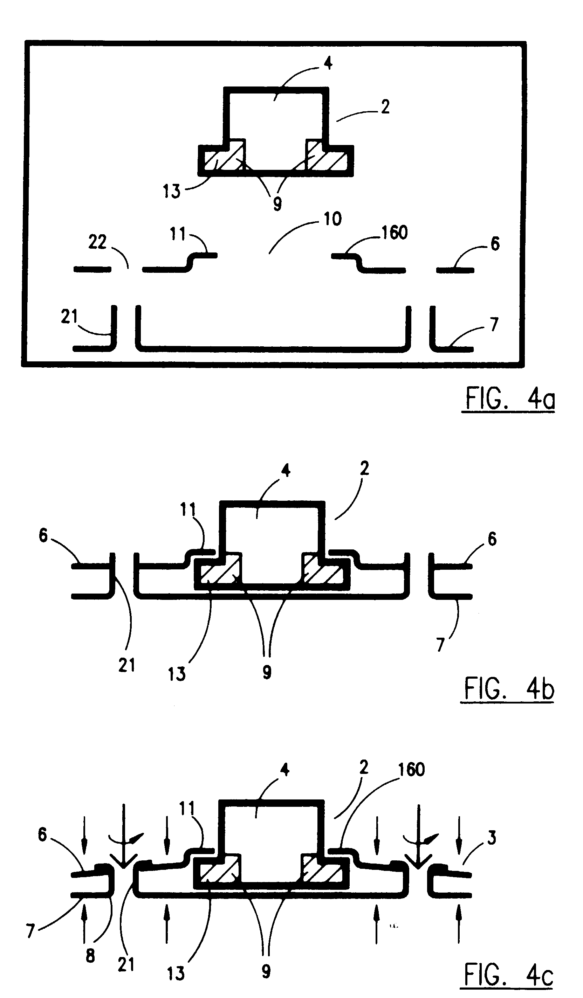

Enfin, l'amélioration de la qualité de la production, le mot qualité étant pris ici au sens d'absence de défauts de fabrication, vient, comme cela apparaîtra clairement dans la description du procédé de fabrication (voir exemple et figures 4a à 4c), du fait que les opérations unitaires sont en nombre limité (fabrication des plots, des deux plaques formant le support et assemblage de ces éléments), qu'elles sont réalisables avec peu de risques d'erreur (séquences éventuellement automatisées), et que, de surcroît, les garnitures fabriquées sont de contrôle aisé, notamment de contrôle visuel.

### DESCRIPTION DES FIGURES

Toutes les figures constituent des exemples de l'invention.

Les figures 1a à 1c représentent en coupe selon l'axe (24) du bloc de friction (4), différentes modalités de déformation des plaques (6, 7) permettant d'obtenir une déformation locale d'épaisseur E, et différentes modalités d'assemblage des deux plaques (6) et (7).
Sur la figure 1a, seule la plaque d'assemblage (6) comprend une déformation locale d'épaisseur E, tandis que la plaque de support (7) porte les éléments mâles (21) de liaison.

Sur la figure 1b, seule la plaque de support (7) comprend une déformation locale d'épaisseur E, et porte les éléments mâles (21) de liaison.

Sur la figure 1c, les deux plaques (6) et (7) comprennent une déformation locale d'épaisseur E, la plaque d'assemblage (6) portant les éléments mâles (21) de liaison.

Les figures 2a et 2b représentent des plots de friction, en vue de dessus, et en coupe selon l'axe (24) du bloc de friction, pour illustrer divers types de rebords (13) permettant, par coopération avec une déformation locale d'une plaque d'assemblage (6) et/ou de support (7), le blocage en rotation du plot de friction.
Sur la figure 2a, le rebord est discontinu et comprend une alternance de 3 portions annulaires en relief (14) et de 3 portions annulaires en creux (absence de rebord).
Sur la figure 2b, le rebord (130) est continu mais sans symétrie axiale.

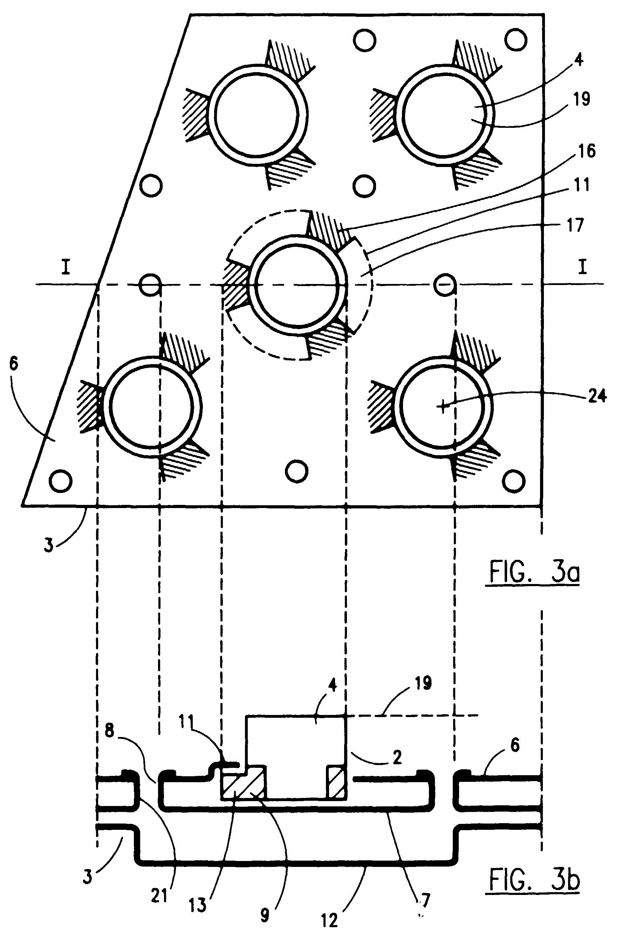

Les figures 3a et 3b représentent une garniture de freins à plots (plots du type de ceux représenté à la figure 2a).
La figure 3a est une vue de dessus et la figure 3b une vue en coupe selon l'axe I-I de la figure 3a.
On a représenté la patte de fixation (12) qui permet la fixation de la garniture sur le moyen de transport.

Les figures 4a à 4c illustrent schématiquement, en coupe selon l'axe (24) du bloc de friction, la fabrication d'une garniture selon l'invention.

La figure 4a représente les 3 éléments à assembler : le plot de friction (2) avec un bord (13), la plaque d'assemblage (6) et la plaque de support (7), la plaque d'assemblage (6) comprenant une couronne (11) avec une partie déformée en relief, ainsi que des orifices de fixation (22), la plaque de support (7) comprenant deux cheminées (21), ces deux plaques étant obtenues par déformation d'une bande métallique .
La figure 4b représente ces mêmes 3 éléments en position d'assemblage.
La figure 4c représente l'assemblage en exerçant une pression de part et d'autre des plaques (6) et (7) et en évasant les cheminées (21).

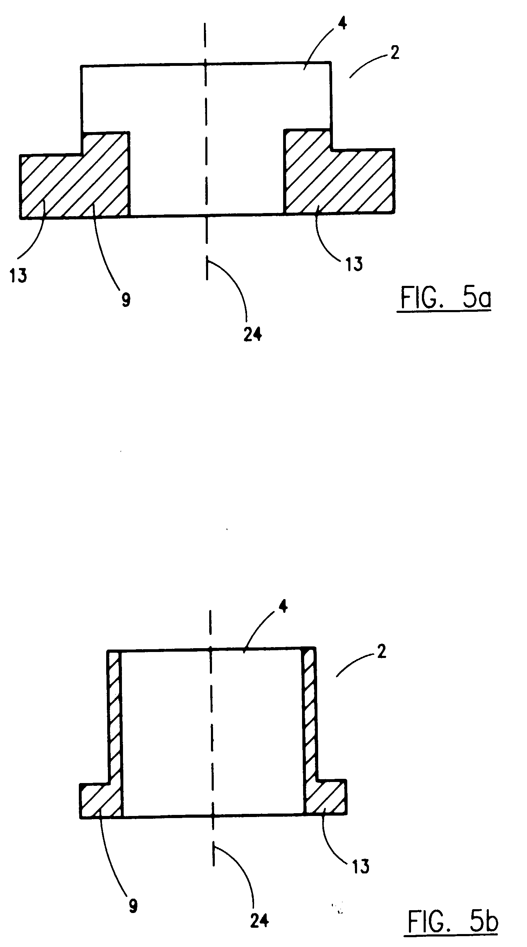

Les figures 5a et 5b représentent, en coupe longitudinale selon l'axe (24), différent types de plots de friction selon l'invention, qui diffèrent par la forme géométrique de l'embase (9), de faible hauteur relative à la figure 5a, de même hauteur que le bloc de friction à la figure 5b.

Les figures 6a à 6e illustrent à l'échelle 1/1 l'exemple selon l'invention.

La figure 6a est une vue de dessus de la garniture fabriqué selon l'exemple.
La figure 6b est une vue en coupe axiale selon l'axe I-I de la figure 6a, la figure 6c représentant un agrandissement de la partie entourée d'un cercle sur la figure 6b.
La figure 6d est une vue de dessous de la même garniture, la figure 6e étant une vue en coupe axiale selon l'axe II-II de la figure 6d.

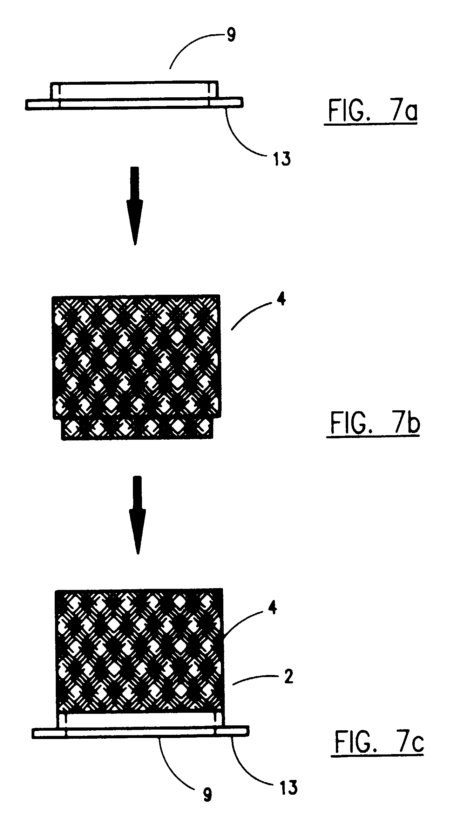

Les figures 7a à 7c illustrent, en coupe axiale, la fabrication d'un plot de friction (2) par fabrication d'une embase (9) (figure 7a), d'un bloc de friction fritté (4) (figure 7b), et l'assemblage de ces deux éléments (figure 7c).

### DESCRIPTION DETAILLEE DE L'INVENTION

L'invention peut être mise en oeuvre selon plusieurs modalités qui permettent toutes d'atteindre les objectifs de l'invention.

Selon une première modalité de garniture selon l'invention, schématisée à la figure la, ladite plaque d'assemblage (6) présente ladite déformation locale, et le blocage en rotation du plot de friction (2) peut être obtenu selon trois variantes différentes.

Selon une première variante, ledit rebord (13) est discontinu et comprend au moins une alternance d'une portion annulaire en relief (14) et d'une portion annulaire en creux (15). Ladite couronne (11) comprend, selon la même dite alternance, des parties déformées en relief (16) et des parties planes (17). Chaque dite portion annulaire en creux (15) s'engrène dans chaque dite partie plane (17), de manière à assurer le blocage en rotation dudit plot. Chaque dite portion annulaire en relief (14) est pincée entre chaque dite partie déformée (16) de la dite couronne (11) et ladite plaque rigide de support (7), de manière à assembler ledit plot (2) et ledit support (3).
Cette variante est illustrée à la figure 2a.
Selon une seconde variante, ledit rebord (130) forme un relief continu, ladite couronne (11), dépourvue de symétrie axiale, présentant une partie déformée en relief (160) adaptée audit rebord (130). Ledit rebord (130) est pincé entre ladite couronne (11) et ladite plaque rigide de support (7), de manière à assurer simultanément le blocage en rotation dudit plot (2) et son assemblage avec ledit support (3).
Cette variante est illustrée à la figure 2b.

Selon une troisième variante, évidente en elle-même, le blocage en rotation résulte du fait que le bloc de friction (4) lui-même ne présente pas de symétrie axiale et que les orifices (10) de la plaque d'assemblage (6) ont une section voisine de celle du bloc de friction. Cependant, ces blocs sans symétrie axiale ne semblent pas présenter d'avantage par rapport à des blocs de friction à symétrie axiale, et de forme typiquement cylindrique.

Selon une seconde modalité de garniture selon l'invention, ladite plaque de support (7) présente ladite déformation locale, le blocage en rotation du plot de friction (2) pouvant être obtenu selon les trois mêmes variantes différentes décrites précédemment.
Cette seconde modalité est illustrée à la figure 1b.

Enfin, selon une troisième modalité, illustrée à la figure 1c, ladite plaque d'assemblage (6) et de ladite plaque rigide de support (7) présentent ladite déformation locale.

Comme cela a été déjà précisé, les plots de friction (2) sont rendus solidaires du support (3) seulement en pinçant les rebords (13) entre les deux plaques (6) et (7) formant le support, et dont au moins une des deux comporte, pour chaque plot, une déformation locale qui présente une section légèrement supérieure à celle du rebord, cette déformation locale (16,160,18) étant destinée à enserrer, à bloquer l'embase (9) du plot de friction (2).

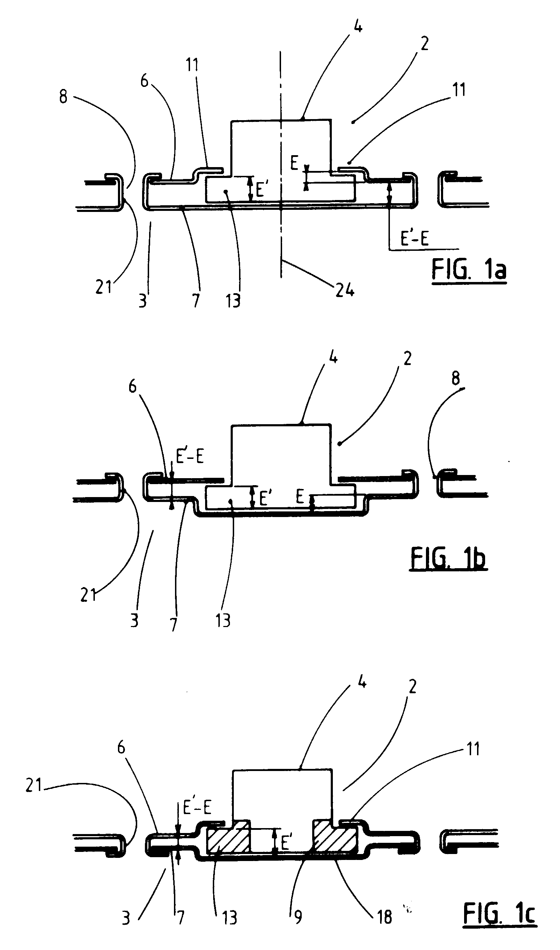

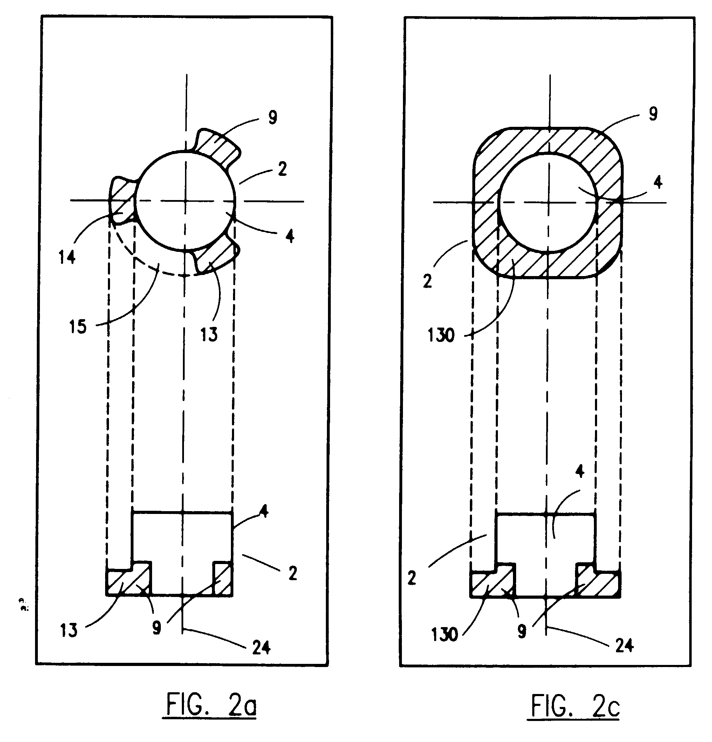

Cette déformation locale présente une hauteur E (distance selon l'axe (24) entre partie plane et partie déformée d'appui). Il va de soi que, lorsque ladite déformation locale est présente sur les deux plaques (6) et (7), la hauteur E correspond à la somme des hauteurs de chacune des deux déformations locales. Voir figures 1a à 1c.
La distance entre plaques (6) et (7) est, hors déformation locale, inférieure à 0,5.E'. Cette distance est sensiblement égale à E'-E.
Elle est de préférence inférieure à 0,1. E', de manière à pouvoir pincer efficacement ledit rebord (13, 130).
Si cette distance est trop élevée, le blocage en rotation est insuffisant. Par contre, il est nécessaire d'avoir E'>E pour obtenir une mise sous tension suffisante des plaques (6) et (7) et donc assurer une pression adéquate sur le rebord (13).

Comme déjà souligné, une caractéristique importante de l'invention, à la fois pour assurer une production de qualité constante, et pour obtenir une garniture à haute performance, et adaptable aux besoins des clients, réside dans le choix des moyens de liaison des deux plaques d'assemblage (6) et de support (7).
Les moyens de liaison mécanique (8) des plaques d'assemblage et de support comprennent des cheminées métalliques (21), obtenues par déformation (emboutissage, repoussage) d'une des plaques d'assemblage ou de support, à l'extrémité évasée après passage à travers des orifices de fixation (22) de l'autre des plaques d'assemblage ou de support, de manière à obtenir un effet de rivetage mettant les plaques en tension l'une par rapport à l'autre, sans pour autant les rendre totalement rigides l'une par rapport à l'autre comme pourrait le faire une liaison mécanique par soudure, ou même par rivetage.
Les deux plaques d'assemblage (6) et de support (7) conservent de ce fait, l'une par rapport à l'autre, une certaine flexibilité, notamment dans le sens axial.

Ce mode de liaison mécanique peut être réparti comme souhaité sur l'ensemble du support (3). Il est donc possible de choisir une compression du rebord (tension entre les plaques formant le support) qui pourrait être différente selon la position du plot de friction sur son support, par exemple ne pas mettre la même compression au centre ou au bord du support.
Cependant, généralement, lesdits moyens de liaison mécanique (8) (cheminées (21) d'une plaque et orifices de fixation (22) de l'autre plaque) sont répartis de manière sensiblement régulière sur l'ensemble dudit support (3), de manière à ce que chaque plot de friction (2) soit entouré, de préférence, par 2 à 4 dits moyens de liaison mécanique.

Ce mode de liaison préféré n'exclut pas la possibilité d'utiliser la soudure à la périphérie du support. En effet, la demanderesse a observé qu'il pouvait y avoir avantage, notamment pour atténuer des vibrations, à ce que, en plus des moyens de liaison selon l'invention, les bords des deux plaques d'assemblage (6) et de support (7) soient soudés, ou présentent des points de soudure (23) à la périphérie de ladite garniture.

En ce qui concerne le choix de matériaux constituant la garniture, il faut distinguer le matériau constituant les plaques (6) et (7), le matériau constituant le bloc de friction (4) et le matériau constituant l'embase (9).

Le matériau constituant les dites plaques (6, 7) est toujours choisi parmi les alliages métalliques, de préférence l'acier. Ces plaques ont une épaisseur généralement comprise entre 1 et 4 mm.
On peut utiliser des nuances d'acier différentes pour chacune des plaques, selon la flexibilité recherché et l'aptitude à la déformation (mise en forme pour obtenir lesdites cheminées et ladite déformation locale).
Au moins une desdites plaques est de préférence un acier à haute limite élastique.
De préférence, on utilise soit deux plaques en acier à haute limite élastique, soit une combinaison d'une plaque en acier à haute rigidité et une plaque en acier à haute limite élastique. Les nuances qui peuvent être utilisées selon l'invention sont de préférence à choisir parmi les nuances allant de E240C à E355C d'une part, et de E315D à E690D d'autre part, désignations selon les normes françaises NF A36-231 et NF A36-232.

En ce qui concerne le matériau constituant ledit bloc de friction (4), il est connu en lui-même, généralement en matériau fritté (poudres métalliques, poudres céramiques), ou en carbone.

Quant'au matériau constituant l'embase (9), c'est généralement un acier à caractéristiques mécaniques élevées, de bonne tenue thermique, et de faible sensibilité aux écarts de température
- un freinage de détresse pouvant conduire à une montée rapide de l'embase à 800°C.
   Comme exemple de matériau adapté pour former une embase, on peut citer un acier type 15CDV6, désignation selon la norme AIR 9160/C.

### EXEMPLES

Les figures des planches 1 à 9 constituent des exemples selon l'invention.
Le détail d'une fabrication de garnitures de frein selon l'invention et représentée aux figures 6a à 6e est exposé dans ce qui suit.
A) Fabrication des plots de friction (2) :
   Elle a été représentée schématiquement aux figures 7a à 7c et comprend la fabrication d'une embase (9) avec sablage et dépôt d'une couche de soudo-brasure sur sa surface intérieure, d'un bloc de friction (4) par frittage et l'assemblage à chaud et sous charge de l'embase et du bloc de friction pour former un plot de friction (2).
B) Fabrication des plaques d'assemblage (6) et de support (7) :
   B1 : la plaque d'assemblage (6), représentée à la figure 6c, a été obtenue à partir d'une bande en acier (nuance E355C selon norme NF déjà citée), de 1,5 mm d'épaisseur, après emboutissage à la presse.
      La mise en forme comprend :
      - la formation de 9 orifices (10) destinés au passage du bloc de friction (4), de 40 mm de diamètre.
      - la déformation locale de chacune des 9 couronnes métalliques (11) bordant ces orifices (10) : pour chaque couronne (11), formation de 3 portions de rebord en relief (16) de 2 mm de hauteur E, et de 3 mm de largeur, alternant avec 3 portions de rebord de la couronne non déformés (17),
      - la formation des 16 orifices de fixation (22), de 7,5 mm de diamètre.
   B2 : La plaque de support (7), représentée à la figure 6c, a été obtenue à partir d'une bande en acier (nuance E280C selon norme NF déjà citée), de 2 mm d'épaisseur, après emboutissage à la presse.
      La mise en forme comprend la formation de 16 cheminées d'une hauteur de 4,8 mm et de diamètre extérieur de 7,5 mm.
C) L'assemblage des plots de friction et des deux plaques constituant le support est réalisé de la manière suivante :
   on a introduit les plots dans les logements ou orifices (10) de la plaque d'assemblage (6). On a superposé les deux plaques d'assemblage (6) et de support (7) et on les a plaquées par pression sur presse pour mettre en contrainte les plots de friction (2) par les rebords (13). On a rabattu ensuite les extrémités des des cheminées (21) pour immobiliser l'ensemble des deux plaques d'assemblage (6) et de support (7). On a complété l'assemblage par 6 soudures par points à la périphérie de la garniture, ce qui diminue le bombé entre les les deux plaques et les vibrations de la garniture de frein.

On obtient ainsi une garniture de frein (1) à 9 plots (2), ces plots étant maintenus pincés et ajustés sans jeu entre les deux plaques (6, 7) constituant le support (3), ce qui assure à la fois une souplesse individuelle des plots et un assemblage solide.
Ces plots ont comme coordonnées, en mm par rapport à l'origine O des axes X-Y (voir figure 6a) :

| N° de plot : | 1 | 2 | 3 | 4 | 5 | 6 | 7 | 8 | 9 |
|---|---|---|---|---|---|---|---|---|---|
| X : | 30 | 75,5 | 125 | 107 | 75,3 | 37,7 | 23,5 | 75 | 34,5 |
| Y : | 37,5 | 25 | 33,5 | 81,5 | 111,5 | 82,5 | 124 | 155 | 172 |

Les performances de la garniture ont été évaluées de deux manières :
- d'une part, par un test de tenue au cisaillement des cheminées : on observe un rupture pour un effort supérieur à 800 daN par cheminée - ce qui assure une large marge de sécurité, compte tenu du nombre de cheminées par garniture.
   En effet, un disque de frein comprend typiquement deux garnitures par face et est soumis à un effort de cisaillement généralement inférieur à 3000 daN, soit 750 daN par garniture, de sorte qu'une seule cheminée par garniture suffirait à maintenir assemblées les plaques (6, 7) constituant le support (3).
- d'autre part, par test de simulation de 300 000 km au banc d'essai - test qui comprend 6000 freinages : tous les tests réalisés ont montré d'une part une absence totale de perte de plots, contrairement à ce qui a été observé avec des garnitures de l'art antérieur, et d'autre part une parfaite conservation de la garniture, en dehors de l'usure normale des blocs de friction.

### AVANTAGES DE L'INVENTION

Comme déjà mentionné, l'invention permet de résoudre simultanément le problème de la perte des plots au cours de la durée de vie des garnitures de frein, le problème de la fabrication économique et fiable de ces garnitures, et le problème de la garantie de qualité.
En effet, la demanderesse a comparé la durée d'assemblage par soudure des plots et selon l'invention et a trouvé une durée d'assemblage environ 5 fois plus grande dans le cas d'un assemblage par soudure que dans le cas d'un assemblage selon l'invention.
Par ailleurs, avec le moyen de liaison mécanique des deux plaques (6) et (7) selon l'invention, et, comme cela a été vérifié en comparant une production de garnitures avec rivetage de plaques et avec liaison selon l'invention, il est impossible "d'oublier" un point de liaison, comme cela arrive fréquemment avec une liaison par soudure ou rivetage. En effet, la fabrication des cheminées, tout comme l'évasement de l'extrémité de chaque cheminée lors de l'assemblage, sont réalisables simultanement à l'aide de dispositifs simples, alors que le même résultat, dans le cas du rivetage ou de la soudure implique généralement de mettre en oeuvre des dispositifs automatiques sophistiqués et coûteux.

En outre, le contrôle de qualité final est beaucoup plus simple et fiable dans le cas de la présente invention : un simple examen visuel suffit, alors qu'évaluer la qualité d'une soudure est un problème à la fois difficile et coûteux.

Il est important aussi de souligner que le fait d'utiliser un moyen de liaison dans le même matériau que le support (plaques (6) et (7)), et présentant donc les mêmes caractéristiques électrochimiques (par exemple le potentiel d'oxydo-réduction) est un grand avantage, par rapport à un moyen de liaison du type rivet ou soudure, en ce qui concerne la tenue à la corrosion (corrosion électrochimique), ce qui contribue à augmenter la durée de vie de la garniture.

Enfin, comme cela a été mentionné, l'invention présente de grandes possibilités de variations :
- variations d'ordre géométrique, comme illustré dans les différentes figures,
- variations dans le choix des matériaux, en particulier, choix de nuances d'acier d'élasticité choisie,
- variations de la tension entre les plaques et le rebord de chaque plot,
- variations de cette tension selon la position de chaque plot sur la garniture.
Tous ces variations permettent d'adapter les garnitures de frein aux exigences et conditions d'exploitation particulières à chaque client.

### APPLICATION

L'invention s'applique dans tous les dispositifs de freinage qui utilisent des garnitures à plots, c'est à dire principalement, dans les moyens de transport ferroviaires, y compris les trains à grande vitesse.

## Revendications

1. Garniture de frein (1) constituée par des plots de friction (2) assemblés sur un support (3) et formant une surface de friction (19), chacun desdits plots de friction (2) comprenant un bloc de friction (4), de section constante sur toute sa hauteur, solidaire d'un élément d'assemblage dudit plot sur ledit support, ledit support comprenant une plaque (7) rigide métallique munie d'une patte de fixation (12) et une plaque d'assemblage (6) comprenant des orifices (10), et caractérisée en ce que,
a) ledit élément d'assemblage est constitué par une embase (9) dudit bloc de friction (4) ayant un rebord (13) dépourvu de symétrie axiale et extérieur à la projection orthogonale dudit bloc (4) sur ledit support (3),
b) ledit rebord (13) est pincé entre tout ou partie d'une couronne (11) de ladite plaque d'assemblage (6) délimitant chaque dit orifice (10), et ladite plaque rigide (7), grâce à des moyens de liaison mécanique (8) entre ces deux plaques (6, 7), comprenant la coopération d'éléments mâles (21) d'une plaque avec des éléments femelles (22) correspondants de l'autre plaque, chaque dit orifice (10) étant de section voisine de celle dudit bloc (4),
c) au moins une desdites plaques (6,7) présente une déformation locale (voisine desdits orifices) de profondeur E, coopérant avec tout ou partie dudit rebord (13) d'épaisseur E' (E' > E), de manière à enserrer ledit rebord et obtenir ainsi le blocage en rotation dudit plot de friction (2).

2. Garniture selon la revendication 1 dans laquelle ladite plaque d'assemblage (6) présente ladite déformation locale.

3. Garniture selon la revendication 2 dans laquelle ledit rebord (13) est discontinu et comprend au moins une alternance d'une portion annulaire en relief (14) et d'une portion annulaire en creux (15), dans laquelle ladite couronne (11) comprend, selon la même dite alternance, des parties déformées en relief (16) et des parties planes (17), dans laquelle chaque dite portion annulaire en creux (15) s'engrène dans chaque dite partie plane (17), de manière à assurer le blocage en rotation dudit plot, et dans laquelle chaque dite portion annulaire en relief (14) est pincée entre chaque dite partie déformée (16) de la dite couronne (11) et ladite plaque rigide de support (7), de manière à assembler ledit plot (2) et ledit support (3).

4. Garniture selon la revendication 2 dans laquelle ledit rebord (130) forme un relief continu, dans laquelle ladite couronne (11), dépourvue de symétrie axiale, présente une partie déformée en relief (160) adaptée audit rebord (130), et dans laquelle ledit rebord (130) est pincé entre ladite couronne (11) et ladite plaque rigide de support (7), de manière à assurer simultanément le blocage en rotation dudit plot (2) et son assemblage avec ledit support (3).

5. Garniture selon la revendication 1 dans laquelle ladite plaque rigide de support (7) présente ladite déformation locale.

6. Garniture selon la revendication 1 dans laquelle ladite plaque d'assemblage (6) et ladite plaque rigide de support (7) présentent ladite déformation locale.

7. Garniture selon une quelconque des revendications 1 à 6 dans laquelle, de manière à pouvoir pincer efficacement ledit rebord (13, 130), la distance entre plaques (6) et (7) est, hors déformation locale, inférieure à 0,5.E'.

8. Garniture selon une quelconque des revendications 1 à 7 dans laquelle dits moyens de liaison mécanique (8) des plaques d'assemblage et de support comprennent des cheminées métalliques (21), obtenues par déformation (emboutissage, repoussage) d'une des plaques d'assemblage ou de support, à l'extrémité évasée après passage à travers des orifices de fixation (22) de l'autre des plaques d'assemblage ou de support, de manière à obtenir un effet de rivetage mettant les plaques en tension l'une par rapport à l'autre.

9. Garniture selon la revendication 8 dans laquelle lesdits moyens de liaison mécanique (8) sont répartis sur l'ensemble dudit support (3), de manière à ce que chaque plot de friction (2) soit sensiblement entouré par, de préférence, au moins 3 dits moyens de liaison mécanique.

10. Garniture selon la revendication 9 dans laquelle lesdits moyens de liaison mécanique (8) comprennent des points de soudure (23) à la périphérie de ladite garniture.

11. Garniture selon une quelconque des revendications 1 à 10 dans laquelle le matériau constituant les dites plaques (6, 7) est choisi parmi les alliages métalliques, de préférence l'acier.

12. Garniture selon la revendication 11 dans laquelle le matériau d'au moins une desdites plaques est de préférence un acier à haute limite élastique.

13. Garniture selon une quelconque des revendications 1 à 12 dans laquelle ledit plot de friction comprend un bloc de friction en matériau fritté (poudres métalliques, poudres céramique), ou en carbone.

## Patentansprüche

1. Bremsschuh (1), der durch Reibungsklötze (2) gebildet ist, die auf einem Träger (3) montiert sind und eine Reibungsfläche (19) bilden, wobei jeder der genannten Reibungsklötze (2) einen Reibungsblock (4) mit einem über seine gesamte Höhe konstanten Querschnitt aufweist, der fest mit einem Montageelement für den genannten Klotz auf dem genannten Träger verbunden ist, und wobei der genannte Träger eine starre Metallplatte (7) aufweist, die mit einer Befestigungsklaue (12) versehen ist und einer Montageplatte (6), die Öffnungen (10) aufweist, dadurch gekennzeichnet, daß
a) das genannte Montageelement mit einem Sockel (9) für den genannten Reibungsblock (4) versehen ist, der eine axial asymmetrische Randleiste (13) aufweist, die außerhalb der rechtwinkligen Projektion des genannten Blocks (4) auf den genannten Träger (3) liegt,
b) die genannte Randleiste (13) zwischen der Gesamtheit oder dem Teil einer kranzförmigen Einfassung (11) der genannten Montageplatte (6), die jede genannte Öffnung (10) umgrenzt, und der genannten starren Platte (7) dank mechanischer Verbindungsmittel (8) zwischen diesen beiden Platten (6, 7) eingeklemmt ist, mit der Zusammenwirkung von Vaterelementen (21) der einen Platte mit entsprechenden Mutterelementen (22) der anderen Platte, wobei jede Öffnung (10) einen Querschnitt aufweist, der dem des genannten Blocks (4) nahekommt, und
c) mindestens eine der genannten Platten (6, 7) eine örtliche Verformung (in der Nähe der genannten Öffnungen) mit der Tiefe E aufweist, die mit der Gesamtheit oder einem Teil der genannten Randleiste (13) mit der Dicke E' (E' > E) zusammenwirkt, um auf diese Weise die genannte Randleiste festzuklemmen und so die Drehsperrung des genannten Reibungsklotzes (2) zu erzielen.

2. Schuh nach Anspruch 1, worin die genannte Montageplatte (6) die genannte örtliche Verformung aufweist.

3. Schuh nach Anspruch 2, worin die genannte Randleiste (13) nicht durchgehend ist und mindestens eine Folge aus einem erhabenen ringförmigen Abschnitt (14) und einem hohlen ringförmigen Abschnitt (15) aufweist, wobei die genannte kranzförmige Einfassung (11) gemäß derselben genannten Folge erhabene verformte Abschnitte (16) und ebene Abschnitte (17) aufweist, wobei jeder genannte ringförmige hohle Abschnitt (15) in jedem genannten ebenen Abschnitt (17) derart eingreift, daß die Drehsperrung des genannten Klotzes sichergestellt ist, und worin jeder genannte ringförmige erhabene Abschnitt (14) zwischen jeden genannten verformten Abschnitt (16) der genannten kranzförmigen Einfassung (11) und die genannte starre Trägerplatte (7) derart eingeklemmt ist, daß der genannte Klotz (2) und der genannte Träger (3) zusammenmontiert sind.

4. Klotz nach Anspruch 2, worin die genannte Randleiste (130) eine durchgehende Randleiste (130) bildet, die genannte kranzförmige, axial asymmetrische Einfassung (11) einen erhabenen, verformten Abschnitt (160) aufweist, der an die genannte Randleiste (130) angepaßt ist, und die genannte Randleiste (130) zwischen die genannte kranzförmige Einfassung (11) und die genannte starre Trägerplatte (7) derart eingeklemmt ist, daß gleichzeitig die Drehsperrung des genannten Klotzes (2) und ein Zusammenbau mit dem genannten Träger (3) sichergestellt sind.

5. Schuh nach Anspruch 1, worin die genannte starre Trägerplatte (7) die genannte örtliche Verformung aufweist.

6. Schuh nach Anspruch 1, worin die genannte Montageplatte (6) und die genannte starre Trägerplatte (7) die genannte örtliche Verformung aufweisen.

7. Schuh nach irgendeinem der Ansprüche 1 bis 6, worin auf eine Art und Weise, um wirksam die genannte Randleiste (13, 130) einklemmen zu können, der Abstand zwischen den Platten (6) und (7) außerhalb der örtlichen Verformung kleiner ist als 0,5.E'.

8. Schuh nach irgendeinem der Ansprüche 1 bis 7, worin die genannten mechanischen Verbindungmittel (8) der Montageplatte und der Trägerplatte Metallstutzen (21) aufweisen, die durch Verformung (Ziehen, Prägen) einer von Montage- oder Trägerplatte erhalten werden, mit aufgeweitetem Ende nach dem Durchtritt durch Befestigungsöffnungen (22) in der anderen von Montage- oder Trägerplatte derart, daß eine Vernietungswirkung erzielt wird, die die Platten zueinander in Zugspannung versetzt.

9. Schuh nach Anspruch 8, worin die genannten mechanischen Verbindungsmittel (8) über die Gesamtanordnung des genannten Trägers (3) derart verteilt sind, daß jeder Reibungsklotz (2) im wesentlichen bevorzugt von mindestens drei der genannten mechanischen Verbindungsmittel umgeben ist.

10. Schuh nach Anspruch 9, worin die genannten mechanischen Verbindungsmittel (8) Schweißpunkte (23) am Umfang des genannten Schuhs aufweisen.

11. Schuh nach irgendeinem der Ansprüche 1 bis 10, worin das Material, das die genannten Platten (6, 7) bildet, unter den Metalllegierungen ausgewählt ist, bevorzugt Stahl.

12. Schuh nach Anspruch 11, worin das Material mindestens eine der genannten Platten bevorzugt Stahl mit hoher Streckgrenze ist.

13. Schuh nach irgendeinem der Ansprüche 1 bis 12, dadurch gekennzeichnet, daß der genannte Reibungsklotz einen Reibungsblock aus gesinterem Material (Metallpuder, keramischer Puder) oder aus Kohlenstoff aufweist.

## Claims

1. A brake lining (1) constituted by friction studs (2) mounted on a support (3) and forming a friction surface (19), each of said friction studs (2) comprising a friction block (4) of which the cross-section is constant over its entire height, rigid with an assembly element for mounting said stud on said support, said support comprising a rigid metal plate (7) provided with a fixing lug (12) and a mounting plate (6) comprising orifices (10), and characterised in that
a) said assembly element consists of a base (9) of said friction block (4) having a flange (13) with no axial symmetry and outside the perpendicular projection of said block (4) on said support (3),
b) said flange (13) gripped between all or part of a ring (11) on said assembly plate (6) defining each said orifice (10) and said rigid mounting plate (7), thanks to mechanical connecting means (8) between these two plates (6,7) comprising the cooperation of male elements (21) on one plate with corresponding female elements (22) on the other plate, each said orifice (10) having a cross-section close to that of said block (4),
c) at least one of said plates (6,7) has a localised deformation (close to said orifices) of depth E, cooperating with all or part of said flange (13) of thickness E' (E' > E), in such a way as to grip said flange and so achieve rotary locking of said friction stud (2).

2. A lining according to Claim 1 wherein said mounting plate (6) displays said localised deformation.

3. A lining according to Claim 2 wherein said flange (13) is discontinuous and comprises at least an alternating arrangement of an annular relief portion (14) and an annular hollow portion (15), wherein said ring (11) comprises, according to the same said alternating pattern, parts which are deformed in relief (16) and plane parts (17), wherein each said hollow annular portion (15) meshes in each said plane part (17) in order to produce a rotational locking of said stud and wherein each said annular relief portion (14) is gripped between each deformed part (16) of said ring (11) and said rigid support plate (7) in order to assemble said stud (2) and said support (3).

4. A lining according to Claim 2 wherein said flange (130) forms a continuous relief, wherein said ring (11), with no axial symmetry, has a part (160) deformed in relief and adapted to match said flange (130), and wherein said flange (130) is gripped between said ring (11) and said rigid support plate (7) in order to ensure simultaneously rotational locking of said stud (2) and its assembly together with said support (3).

5. A lining according to Claim 1 wherein said rigid support plate (7) has said localised deformation.

6. A lining according to Claim 1 wherein said mounting plate (6) and said rigid support plate (7) display said localised deformation.

7. A lining according to any one of Claims 1 to 6 wherein, in order to be able effectively to grip said flange (13,130), the distance between plates (6) and (7), outside of the localised deformation, is less than 0.5 x E'.

8. A lining according to any one of Claims 1 to 7 wherein said mechanical means (8) of connecting the assembly and support plates comprise small metal sleeves (21) obtained by deformation (deep drawing, snarling) of one of the mounting or support plates, at the flared end after passing through the fixing orifices (22) of the other of the assembly or support plates, so as to obtain a riveting effect bringing the plates in tension the one in relation to the other.

9. A lining according to Claim 8 wherein said mechanical connecting means (8) are distributed over the assembly of said support (3) in such a way that each friction stud (2) is substantially surrounded by preferably at least three said mechanical connecting means.

10. A lining according to Claim 9 wherein said mechanical connecting means (8) comprise welding points (23) on the periphery of said lining.

11. A lining according to any one of Claims 1 to 10 wherein the material constituting said plates (6,7) is chosen from among the metal alloys, preferably steel.

12. A lining according to Claim 11 wherein the material of at least one of said plates is preferably a steel with a high elastic limit.

13. A lining according to any one of Claims 1 to 12 wherein said friction stud comprises a friction block of sintered material (metallic powders, ceramic powders) or carbon.
